# EUROPEAN PATENT SPECIFICATION

(11) **EP 4 310 581 B1**
(45) Date of publication and mention of the grant of the patent: **18.03.2026**
(21) Application number: 22186343.4
(22) Date of filing: 21.07.2022
(51) Int. Cl.: G02C 5/22, G02C 11/00

(54) **EYEWEAR DEVICE**
BRILLENVORRICHTUNG
DISPOSITIF DE LUNETTES

(43) Date of publication of application: 24.01.2024
(73) Proprietor: Nokia Technologies Oy, 02610 Espoo (FI)
(72) Inventor: RADIVOJEVIC, Zoran, Cambridge (GB); VAN DEN BROECK, Marc, Sint-Katelijne-Waver (BE)
(74) Representative: Whiting, Gary

(56) References cited:
- CN-A- 112 987 316
- US-A1- 2010 309 425
- US-A1- 2012 155 064
- US-A1- 2016 170 230
- US-A1- 2021 255 481
- US-B1- 11 340 463
- LIU YANG: "CN112987316A -FOLDING MECHANISM AND INTELLIGENT GLASSES", 18 June 2021 (2021-06-18), pages 1 - 17, XP093011715, Retrieved from the Internet <URL:None> [retrieved on 20230104]

## Description

### Field

The present specification relates to an eyewear device, such as glasses or smart-glasses.

### Background

Eye glasses or other eyewear devices (such as smart glasses) may need recharging from time to time. There remains a need for improvement in techniques for improving operational life of eyewear devices.

CN 112 987 316 A discloses a folding mechanism and intelligent glasses. The folding mechanism comprises a first part, a second part and a first hinge mechanism, the first hinge mechanism is rotatably connected with the first part and the second part, the first hinge mechanism comprises a first hinge shell, a cover body and an elastic part, the first hinge shell is provided with a hinge cavity and an opening, the opening is communicated with the hinge cavity and the external environment of the first hinge shell; the elastic part is connected with the cover body and at least one of the first part and the second part, and the elastic part is configured to drive the cover body to move relative to at least one of the first part and the second part so as to seal the opening when at least one of the first part and the second part rotates relative to the first hinge mechanism.

US 11340463 B1 discloses an artificial-reality device. The artificial-reality device includes a frame having at least one temple section (e.g., a frame arm) and a front section, where the front section is configured to hold at least one lens. The artificial-reality device also includes a hinge pivotally coupling the at least one temple section and the front section. The hinge includes: (A) a front magnetic component that includes a static magnet, and (B) a rear magnetic component, coupled to the at least one temple section, that includes: (i) two or more primary magnets oriented so as to be attracted to the static magnet of the front magnetic component, and (ii) at least one secondary magnet, positioned between the two or more primary magnets, oriented so as to be repelled by the static magnet of the front magnetic component.

US 2021/255481 A1 discloses eyewear having a frame, a hinge, and a hyperextendable temple. An extender is coupled to the hinge and the temple, and the extender extends with respect to the hinge allowing hyperextension of the temple with respect to the frame. The extender may include a bushing and a spring that allows the temple hyperextension, and which also creates a bias force to urge the temple against a user's head during use.

US 2016/170230 A1 discloses an eyewear hinge for removably connecting an earpiece to a lens frame. A lens mount is attached to the lens frame and has one of a hinge receiver and a security slot or a hinge post and a security ledge. A hinge support is attached to the earpiece and has the other of the hinge receiver and the security slot or the hinge post and the security ledge. The hinge post is removably insertable into the hinge receiver and the security ledge is removably receivable in and engages with the security slot as the lens mount and hinge support pivot relative to one another.

### Summary

In a first aspect, this specification provides an eyewear device (e.g. so-called smart glasses) comprising: one or more detachable arms; and a frame comprising one or more hinges and, optionally, one or more lenses or displays, wherein at least one of the one or more hinges comprise one or more magnetic elements (e.g. magnetic cylinders) suitable for attaching said one or more detachable arms to the frame, and wherein the one or more hinges are retractable, such that said one or more hinges are configured to retract into a cavity within said frame when said one or more detachable arms are detached from the respective hinge. The detachable arms may include ferromagnetic material. The cavity may be configured to at least substantially confine magnetic fields from said one or more magnetic elements within the cavity.

The one or more detachable arms may comprise one or more rechargeable power supplies configured to supply power to the eyewear device when the one or more detachable arms are attached to the frame.

The one or more detachable arms may comprise a detachable projector for projecting visual data on said one or more lenses or displays of the frame.

The one or more hinges may be configured to eject from said cavity to engage with said one or more detachable arms for attaching the frame with the one or more detachable arms.

The one or more hinges may comprise rotation mechanisms to allow the one or more detachable arms to be rotated with respect to said frame.

The one or more hinges may comprise electric wiring.

In a second aspect, this specification provides a frame of an eyewear device (such as smart glasses) comprising: one or more hinges comprising one or more magnetic elements (e.g. comprising magnetic cylinders) suitable for attaching one or more detachable arms to said frame, wherein the one or more hinges are retractable, such that said one or more hinges are configured to retract into a cavity within said frame when said one or more detachable arms are detached from the respective hinge. The frame may comprise one or more lenses or displays. The cavity may be configured to at least substantially confine magnetic fields from said one or more magnetic elements within the cavity.

The one or more hinges may be configured to eject from said cavity to engage with said one or more detachable arms for attaching the frame with the one or more detachable arms.

The one or more hinges may comprise rotation mechanisms to allow the one or more detachable arms to be rotated with respect to said frame.

The one or more hinges may comprise electric wiring.

In a third aspect not covered on its own by the independent claims, this specification provides an arm of an eyewear device, wherein the arm is configured to be detachably attached to the eyewear device by way of magnetic attraction with one or more hinges of the eyewear device. The arm may comprise one or more inductive coils suitable for inductively charging the arm from a power supply. Alternatively, or in addition, the arm may comprise a detachable projector for projecting visual data on one or more lenses or displays of the eyewear device.

In a fourth aspect not covered on its own by the independent claims, this specification provides a storage unit suitable for storing one or more of an eyewear device as described with reference to the first aspect, a frame as described with reference to the second aspect and one or more detachable arms as described with reference to the third aspect. The storage unit may comprise: a power supply and one or more charging interfaces suitable for supplying power from the power supply to the one or more detachable arms when said one or more detachable arms are engaged with the one or more charging interfaces.

The storage unit may further comprise a touch sensitive user interface, wherein the touch sensitive user interface is suitable for enabling user interaction with the eyewear device.

In a fifth aspect, this specification provides a method of using an eyewear device, the method comprising: attaching one or more detachable arms to a frame of the eyewear device at one or more hinges of the frame by way of magnetic attraction between one or more magnetic elements of the one or more hinges and the one or more arms respectively and/or detaching one or more arms from the frame of the eyewear device, wherein at least one of the one or more hinges are retractable, such that said at least one hinge is configured to retract into a cavity within said frame when said one or more detachable arms are detached from the at least one hinge. The cavity may be configured to at least substantially confine magnetic fields from said one or more magnetic elements within the cavity.

The method may comprise supplying power to the eyewear device using a rechargeable power supply of one or more of said detachable arms.

The method may comprise projecting visual data from one or more of said detachable arms on said one or more lenses or displays of the frame.

The method may comprise ejecting said one or more hinges from said cavity to engage with said one or more detachable arms for attaching the frame with the one or more detachable arms. The one or more hinges may comprise rotation mechanisms to allow the one or more detachable arms to be rotated with respect to said frame.

### Brief description of the drawings

Example embodiments will now be described, by way of example only, with reference to the following schematic drawings, in which:
FIG. 1 is an illustration of an eyewear device in accordance with an example embodiment;
FIG. 2 is an illustration of a frame of an eyewear device in accordance with an example embodiment;
FIGs. 3 and 4 are illustrations of arms of eyewear devices in accordance with example embodiments;
FIGs. 5 and 6 are illustrations of eyewear devices in accordance with example embodiments;
FIG. 7 is an illustration of an arm of an eyewear device in accordance with an example embodiment;
FIGs. 8 and 9 are illustrations of storage units in accordance with example embodiments; and
FIG. 10 is a flowchart of an algorithm in accordance with an example embodiment.

### Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

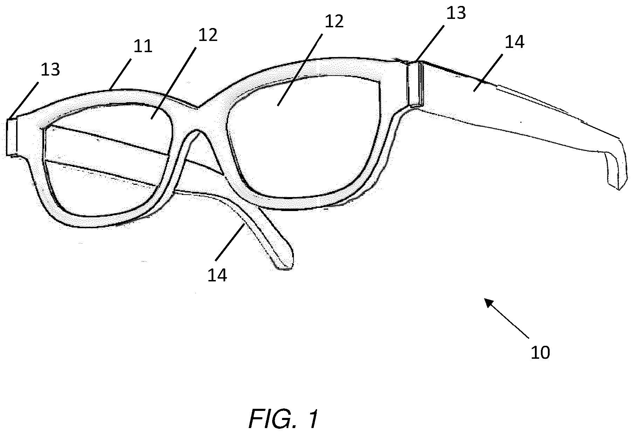

FIG. 1 is an illustration of an eyewear device, indicated generally by the reference numeral 10, in accordance with an example embodiment. The eyewear device 10 may, for example, be glasses, smart-glasses, virtual reality glasses, mixed reality or augmented reality glasses, a headset, head-mounted display, or the like. The eyewear device 10 comprises one or more detachable arms 14 and a frame 11. The frame 11 may comprise one or more lenses or displays 12 and one or more hinges 13. For example, the hinges 13 may comprise one or more magnetic elements suitable for attaching the one or more respective detachable arms 14 to the frame 11. The one or more hinges 13 may be configured to retract into a cavity within the frame 11 when the one or more detachable arms 14 are detached from the respective hinge 13.

In one example embodiment, the one or more hinges 13 comprise rotation mechanisms to allow the one or more detachable arms 14 to be rotated with respect to said frame.

The attachment and/or detachment of the arms 14 to the frame 11 is described in further detail below.

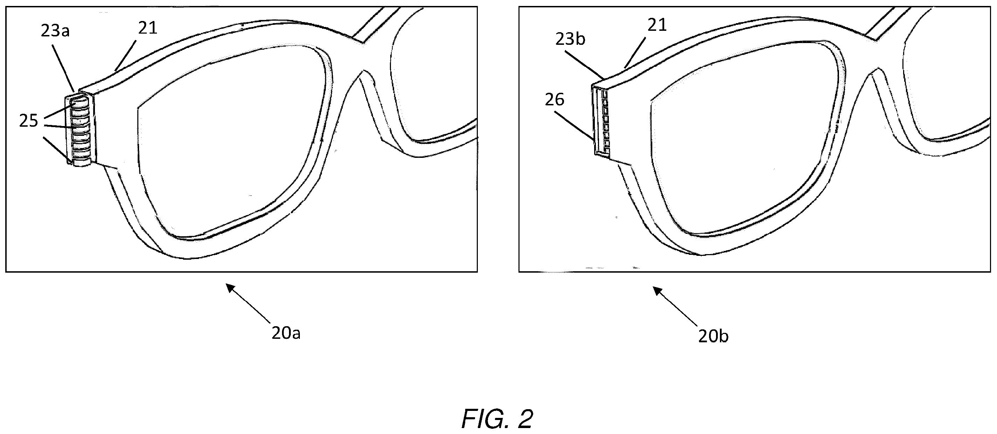

FIG. 2 is an illustration of a frame 21, in accordance with an example embodiment. In a first view 20a, the frame 21 is shown with hinge 23a, where the hinge 23a is shown to be in an ejected position. The hinge 23a may comprise a plurality of magnetic elements 25 (e.g. magnetic discs or cylinders). In a second view 20b, the frame 21 is shown with hinge 23b in a retracted position. For example, when arms of the eyewear device is detached from the hinge 23b, the hinge 23b may be configured to retract into a cavity 26 of the frame 21.

In an example embodiment, the retraction of the hinge 23b into the cavity 26 may be performed by means of a spring or other elastic element inside the frame. For example, when an arm of the eyewear device, which arm is magnetically attached to the hinge 23a in ejected position, is detached (e.g. pulled) from the frame, the hinge 23b may retract into the cavity 26 by a pulling force from the spring due to the magnetic attraction force from the arm being removed. The cavity 26 may sufficiently enclose the magnetic elements of the hinge 23b, such that magnetic field of the magnetic elements are substantially confined within the cavity 26. In one example, the cavity 26 is made of a magnetic alloy (e.g. nickel-iron Permalloy) material that may function as a magnetic field confinement means that substantially prevents leakage of the magnetic field outside the frame. For example, such retraction and confinement mechanism may prevent the magnetic elements or the magnetic field of the magnetic elements to come in close proximity to an external object (e.g. bank or memory card, memory stick, phone surface, any sensitive electronics such as human implants, or the like, which can be negatively affected by magnetic field leakage).

In an example embodiment, the one or more hinges (13, 23) may comprise electric wiring (e.g. input/output electric lines). For example, such electric wiring may enable power and/or data transfer from the arms 14 to the frame 11, or to any other parts of the eyewear device.

In some examples, there may be risks associated with magnetic elements (e.g. rare earth magnets, such as neodymium, with strong magnetic properties) being exposed in open spaces. For example, if such magnetic elements are not enclosed appropriately, devices may malfunction or certain functionalities of devices may fail. As such, the eyewear devices 10 and frame 20 as described above with reference to FIGs. 1 and 2 respectively, comprise retractable hinges, so as to ensure that the magnetic elements of the hinges are in a cavity (e.g. a magnetically safe cavity) when the respective arms are detached from the frame. This may minimize magnetic field leakage from the magnetic elements.

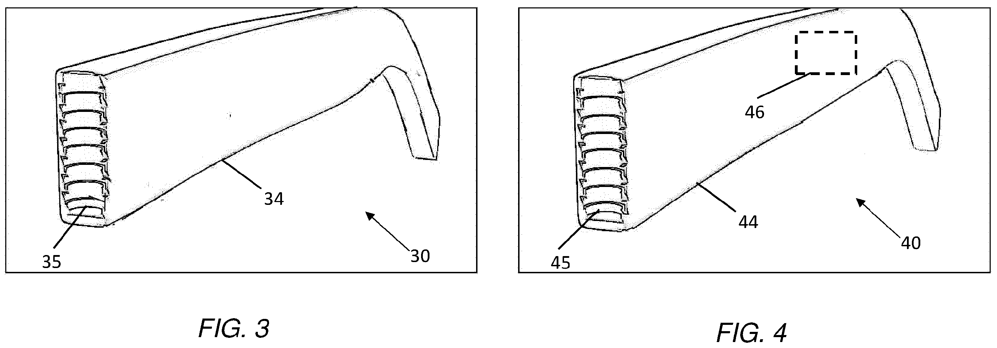

FIG. 3 is an illustration, indicated by the reference numeral 30, of an arm of an eyewear device, in accordance with an example embodiment. The illustration 30 shows an arm 34 having a hinge end 35. For example, the hinge end 35 is shaped so as to fit with one or more magnetic elements of a hinge (13, 23) of a frame (11,21) of an eyewear device (10), such that the arm 34 is attached to the frame by way of attraction between the one or more magnetic elements and the hinge end 35 of the arm 34. Further, the hinge end 35 may be shaped to enable rotation of the arm 34 with respect to the frame when the arm 34 is attached to the frame. The arm 34 may at least partially comprise ferromagnetic material to provide sufficient attraction force for the one or more magnetic elements on the hinge of the frame of the eyewear device. In one example, only part of the arm 34, such as a part comprising the hinge end 35, comprises the ferromagnetic material.

FIG. 4 is an illustration, indicated by the reference numeral 40, of an arm of an eyewear device, in accordance with an example embodiment. The illustration 40 shows an arm 44 (similar to arm 34) having a hinge end 45. For example, the hinge end 45 is shaped so as to fit with one or more magnetic elements of a hinge (13, 23) of a frame (11,21) of an eyewear device (10). The arm 45 further comprises one or more rechargeable power supplies 46 configured to supply power to the eyewear device when the arm 44 is attached to the frame of the eyewear device.

Eyewear devices may require power from one or more power supplies, such as rechargeable batteries. For example, arms 14, similar to the arm 44, of the eyewear device 10 may comprise rechargeable batteries, similar to the power supply 46, that provide power to the eyewear device 10. The arms being detachable allows the use of spare arms, for example, such that arms that have low power level may be replaced by other arms that have higher power level (e.g. fully charged). In this way, the eyewear device may be have a longer operational life, as a user of the eyewear device may not be required to stop using the eyewear device while the arms having low power level are being recharged.

In an example embodiment, the hinges (13, 23) may attach with a hinge end (35, 45) of the arms of an eyewear device such that the arms may be adjustable based on a head shape of a user or wearer of the eyewear device.

In one example embodiment, the arm 44 (similar to arm 14) may comprise a charging mechanism, for example, in order to recharge the rechargeable power supply 46. In one example embodiment, the charging mechanism may be implemented by inductive coil(s) within the arm. For example, the inductive coil may be placed at the end of the arm that is opposite to that of the hinge end 45. The inductive coil may enable inductive charging of the power supply 46 in the arm 44 when the arm 44 is in inductively in contact or in close proximity with a charging means. Such an inductive charging mechanism may prevent the need of an open area contact on the arm for charging, which may be beneficial for use of the arms within the eyewear device in wet environments (e.g. rainy day, or near a sea, pool, lake, or the like).

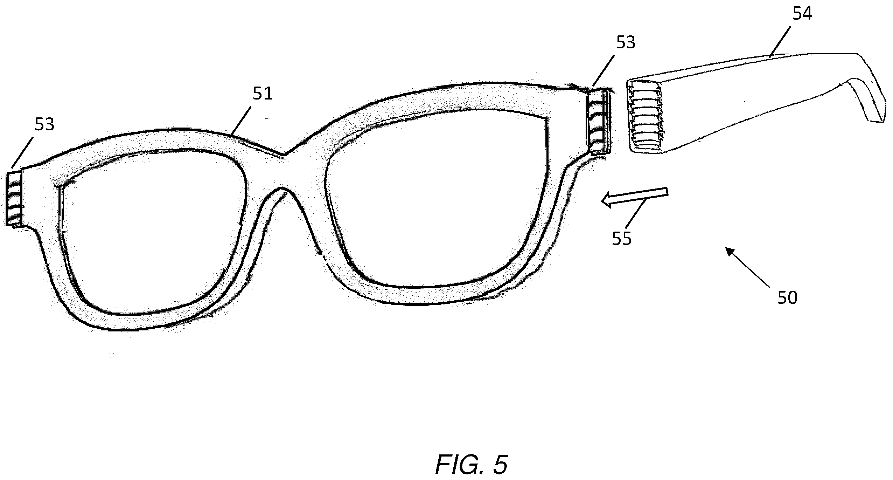

FIG. 5 is an illustration of an eyewear device, indicated generally by the reference numeral 50, in accordance with an example embodiment. The eyewear device 50 comprises one or more arms 54 (similar to arms 14, 34, 44) and frame 51 (similar to frames 11 and 21) having a hinge 53 (similar to hinges 13, 23). The hinge 53 may be configured to eject from a cavity (e.g. cavity 26) within the frame 51 in order to engage with the arm 54 for attaching the frame 51 with the arm 54. For example, when the arm 54 is in close proximity with the hinge 53 (e.g. moved closer to the hinge 53, as shown by the arrow 55), the hinge 53 may eject out of the cavity of frame 51 (e.g. due to pulling force of the magnetic attraction between the magnetic elements of the hinge 53 and the hinge end of the arm 54.

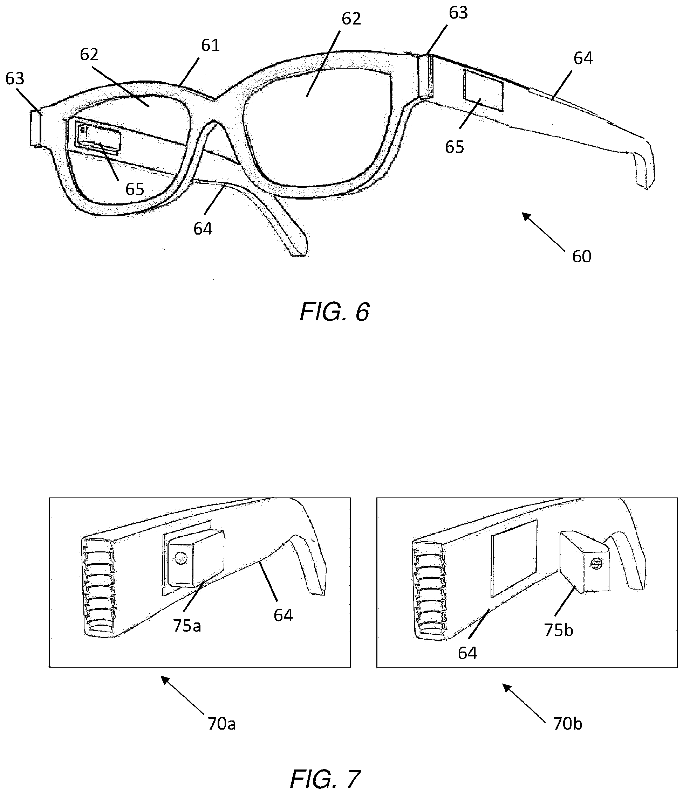

FIG. 6 is an illustration of an eyewear device, indicated generally by the reference numeral 60, in accordance with an example embodiment. The eyewear device 60 comprises arms 64 (similar to arms 14, 34, 44, 54) and frame 61 (similar to frames 11, 21, 51) having hinges 63 (similar to hinges 13, 23, 53) and lenses or displays 62. The arms 64 further comprise respective projectors 65 (e.g. micro-projectors) that may be suitable for projecting visual data on the respective lenses 62. In one example, the projectors 65 may be detachable.

FIG. 7 is an illustration, indicated by the reference numerals 70a and 70b, of an arm of an eyewear device. Views 70a and 70b show the arm 64 (e.g. of the eyewear device 60 of FIG. 6). View 70a shows the arm 64 with projector 75a attached to the arm 64, while view 70b shows the arm 64 with projector 75b detached from the arm 64. As such, the projector 75 (75a, 75b) may be detachable from the arm 64 (e.g. detachable by pressing, pulling, or any other mechanical means). In one example, the projector 75 may be detached from the arm 64 when the arm 64 is being recharged, for example, such that, the projector 75 may then be attached to a different (spare) arm, which arm is then attached and used with the eyewear device 60.

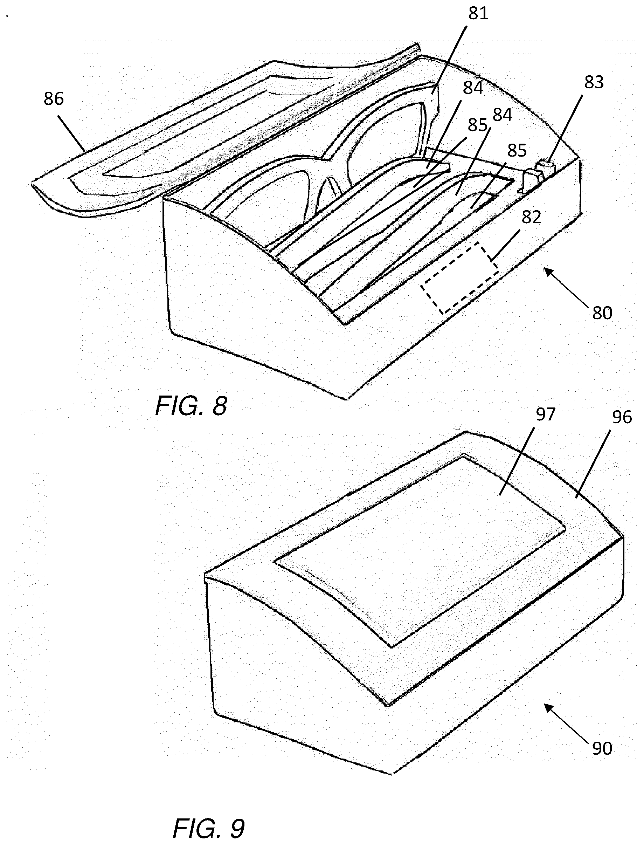

FIG. 8 is an illustration of a storage unit, indicated generally by the reference numeral 80. The storage unit 80 (shown in an open position) is suitable for storing one or more of an eyewear device (similar to eyewear devices 10, 50), a frame 81 (similar to frames 11, 21, 51, 61), one or more detachable arms 84 (similar to arms 14, 34, 44, 54, 64) of an eyewear device, and one or more projectors 83. The storage unit 81 may comprise a power supply 82 (e.g. within the casing of the storage unit, such that the power supply 82 is not exposed during normal use of the storage unit 80), and one or more charging interfaces 85. The charging interfaces 85 may be suitable for supplying power from the power supply 82 to the one or more detachable arms 84 when said one or more detachable arms 84 are engaged with the one or more charging interfaces 85. In one example, the charging interfaces 85 may be inductive charging interfaces that are suitable for supplying power from the power supply 82 to the one or more detachable arms 84 by way of inductive charging. In one example, the power supply 82 may comprise a battery (e.g. a rechargeable battery with sufficiently energy storage capacity so as to be able to charge a plurality of detachable arms of the eyewear device). The storage unit 80 may further comprise a covering or lid 86 for enclosing eyewear device(s) or parts of eyewear device(s) stored within the storage unit 80. The storage unit 80 may optionally comprise communications interface(s) (e.g. Wi-Fi ^{™}, Bluetooth ^{™}, or the like).

FIG. 9 is an illustration of a storage unit, indicated generally by the reference numeral 90. The storage unit 90 (shown in closed position) may be similar to the storage unit 80 comprising one or more power supplies and charging interfaces, and suitable for storing eyewear device(s) or parts (frames, arms, projectors) of eyewear device(s). The storage unit 90 comprises a lid or covering 96 (similar to covering 86). The lid or covering 96 may comprise a touch sensitive user interface 97, for example, on the outer surface of the lid or covering 96. The touch sensitive user interface 97 may be suitable for enabling user interaction with the eyewear device (e.g. when the eyewear device is in use). For example, when a user or wearer uses the eyewear device, the user or wearer may use the touch sensitive user interface 97 as a pointer for controlling or interacting with elements projected on lenses or displays of the eyewear device. For example, movement of a finger or digital stylus on the touch sensitive user interface 97 (e.g. a touchpad) may cause movement of a pointer on the lenses or displays of the eyewear device (e.g. thus enabling browsing digital content or executing commands in real time).

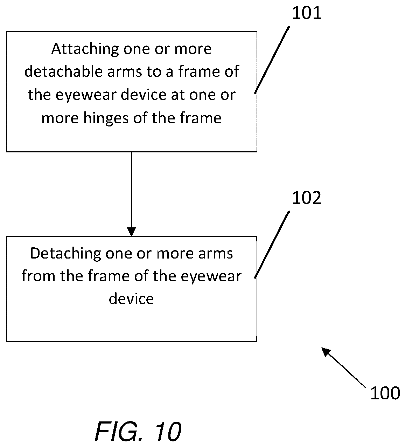

FIG. 10 is a flowchart of an algorithm, indicated generally by the reference numeral 100, in accordance with an example embodiment as defined in claim 10. The algorithm 100 shows a method of using an eyewear device (e.g. eyewear devices 10, 50, 60). At operation 101, one or more detachable arms (14, 34, 44, 54, 64) are attached to a frame (11, 21, 51, 61) of the eyewear device at one or more hinges (13, 23, 53, 63) of the frame by way of magnetic attraction between one or more magnetic elements of the one or more hinges and the one or more arms respectively.

Alternatively, or in addition, at operation 102, one or more arms are detached from the frame of the eyewear device (e.g. by pulling the arms away from the frame). As described earlier, at least one of the one or more hinges are retractable, such that said at least one hinge is configured to retract into a cavity within said frame when said one or more detachable arms are detached, at operation 102, from the at least one hinge.

In some examples embodiment, the algorithm 100 may further comprise supplying power to the eyewear device using a rechargeable power supply of one or more of said detachable arms.

In some examples embodiment, the algorithm 100 may further comprise projecting visual data from one or more of said detachable arms on said one or more lenses or displays of the frame.

In some examples embodiment, the algorithm 100 may further comprise ejecting said one or more hinges from said cavity to engage with said one or more detachable arms for attaching the frame with the one or more detachable arms. The one or more hinges may comprise rotation mechanisms to allow the one or more detachable arms to be rotated with respect to said frame.

It should be appreciated that the eyewear device, parts of the eyewear device, or storage unit may be of any other shape or form, and that the illustrations of FIGs. 1 to 9, are examples only.

## Claims

1. A frame (11, 21, 51, 61, 81) of an eyewear device comprising:
one or more hinges (13, 23, 53, 63) comprising one or more magnetic elements (25) suitable for attaching one or more detachable arms (14, 34, 44, 54, 64, 84) to said frame,
wherein the one or more hinges are retractable, such that said one or more hinges are configured to retract into a cavity (26) within said frame when said one or more detachable arms are detached from the respective hinge.

2. A frame as claimed in claim 1, wherein the one or more hinges are configured to eject from said cavity to engage with said one or more detachable arms for attaching the frame with the one or more detachable arms.

3. A frame as claimed in any one of the preceding claims, wherein the one or more magnetic elements comprise magnetic cylinders.

4. A frame as claimed in any one of the preceding claims, wherein the one or more hinges comprise rotation mechanisms to allow the one or more detachable arms to be rotated with respect to said frame.

5. A frame as claimed in any one of the preceding claims, wherein the cavity is configured to at least substantially confine magnetic fields from said one or more magnetic elements within the cavity.

6. A frame as claimed in any one of the preceding claims, wherein the one or more hinges comprise electric wiring.

7. An eyewear device (10, 50, 60) comprising:
the frame of any preceding claim, further comprising one or more lenses or displays (12, 62); and
the one or more detachable arms that the one or more magnetic elements are suitable for attaching to the frame.

8. An eyewear device as claimed in claim 7, wherein the one or more detachable arms comprise one or more rechargeable power supplies (46, 82) configured to supply power to the eyewear device when the one or more detachable arms are attached to the frame.

9. An eyewear device as claimed in claim 7 or claim 8, wherein the one or more detachable arms comprise a detachable projector (65, 75a, 75b, 83) for projecting visual data on said one or more lenses or displays of the frame.

10. A method (100) of using the eyewear device of claim 7, the method comprising:
Attaching (101) one or more detachable arms to the frame of the eyewear device at the one or more hinges of the frame by way of magnetic attraction between the one or more magnetic elements of the one or more hinges and the one or more arms respectively and/or
Detaching (102) the one one or more arms from the frame of the eyewear device,
wherein at least one of the one or more hinges are retractable, such that said at least one hinge is configured to retract into the cavity within said frame when said one or more detachable arms are detached from the at least one hinge.

## Patentansprüche

1. Gestell (11, 21, 51, 61, 81) einer Brillenvorrichtung, umfassend:
ein oder mehrere Scharniere (13, 23, 53, 63), die ein oder mehrere Magnetelemente (25) umfassen, die dazu geeignet sind, einen oder mehrere abnehmbare Bügel (14, 34, 44, 54, 64, 84) an dem Gestell anzubringen,
wobei das eine oder die mehreren Scharniere einziehbar sind, so dass das eine oder die mehreren Scharniere dazu konfiguriert sind, sich in einen Hohlraum (26) im Innern des Gestells zurückzuziehen, wenn der eine oder die mehreren abnehmbaren Bügel von dem jeweiligen Scharnier abgenommen werden.

2. Gestell nach Anspruch 1, wobei das eine oder die mehreren Scharniere dazu konfiguriert sind, aus dem Hohlraum ausgestoßen zu werden, um mit dem einen oder den mehreren abnehmbaren Bügeln in Eingriff zu kommen, um das Gestell an dem einen oder den mehreren abnehmbaren Bügeln anzubringen.

3. Gestell nach einem der vorhergehenden Ansprüche, wobei das eine oder die mehreren Magnetelemente Magnetzylinder umfassen.

4. Gestell nach einem der vorhergehenden Ansprüche, wobei das eine oder die mehreren Scharniere Rotationsmechanismen umfassen, damit sich der eine oder die mehreren abnehmbaren Bügel im Verhältnis zu dem Gestell drehen können.

5. Gestell nach einem der vorhergehenden Ansprüche, wobei der Hohlraum dazu konfiguriert ist, die Magnetfelder von dem einen oder den mehreren Magnetelementen im Innern des Hohlraums mindestens im Wesentlichen zu begrenzen.

6. Gestell nach einem der vorhergehenden Ansprüche, wobei das eine oder die mehreren Scharniere eine elektrische Verkabelung umfassen.

7. Brillenvorrichtung (10, 50, 6o), umfassend:
das Gestell nach einem der vorhergehenden Ansprüche, ferner umfassend eine oder mehrere Linsen oder Anzeigen (12, 62); und
den einen oder die mehreren abnehmbaren Bügel, für deren Anbringung an dem Gestell das eine oder die mehreren Magnetelemente geeignet sind.

8. Brillenvorrichtung nach Anspruch 7, wobei der eine oder die mehreren abnehmbaren Bügel eine oder mehrere wiederaufladbare Stromversorgungen (46, 82) umfassen, die dazu konfiguriert sind, die Brillenvorrichtung mit Strom zu versorgen, wenn der eine oder die mehreren abnehmbaren Bügel an dem Gestell angebracht werden.

9. Brillenvorrichtung nach Anspruch 7 oder Anspruch 8, wobei der eine oder die mehreren abnehmbaren Bügel einen abnehmbaren Projektor (65, 75a, 75b, 83) umfassen, um visuelle Daten auf die eine oder die mehreren Linsen oder Anzeigen des Gestells zu projizieren.

10. Verfahren (100) zum Verwenden der Brillenvorrichtung nach Anspruch 7, wobei das Verfahren umfasst:
Anbringen (101) eines oder mehrerer abnehmbarer Bügel an dem Gestell der Brillenvorrichtung an dem einen oder den mehreren Scharnieren des Gestells durch magnetische Anziehungskraft zwischen jeweils dem einen oder den mehreren Magnetelementen des einen oder der mehreren Scharniere und dem einen oder den mehreren Bügeln, und/oder
Abnehmen (102) des einen oder der mehreren Bügel von dem Gestell der Brillenvorrichtung,
wobei mindestens eines von dem einen oder den mehreren Scharnieren einziehbar ist, so dass das mindestens eine Scharnier dazu konfiguriert ist, sich in den Hohlraum innerhalb des Gestells zurückzuziehen, wenn der eine oder die mehreren abnehmbaren Bügel von dem mindestens einen Scharnier abgenommen werden.

## Revendications

1. Monture (11, 21, 51, 61, 81) d'un dispositif de lunettes comprenant :
une ou plusieurs charnières (13, 23, 53, 63) comprenant un ou plusieurs éléments magnétiques (25) appropriés pour fixer une ou plusieurs branches détachables (14, 34, 44, 54, 64, 84) à ladite monture,
dans laquelle les une ou plusieurs charnières sont rétractables, de sorte que lesdites une ou plusieurs charnières sont configurées pour se rétracter dans une cavité (26) à l'intérieur de ladite monture, lorsque lesdites une ou plusieurs branches détachables sont détachées de la charnière respective.

2. Monture selon la revendication 1, dans laquelle les une ou plusieurs charnières sont configurées pour s'éjecter de ladite cavité pour se mettre en prise avec lesdites une ou plusieurs branches détachables afin de fixer la monture avec les une ou plusieurs branches détachables.

3. Monture selon l'une quelconque des revendications précédentes, dans laquelle les un ou plusieurs éléments magnétiques comprennent des cylindres magnétiques.

4. Monture selon l'une quelconque des revendications précédentes, dans laquelle les une ou plusieurs charnières comprennent des mécanismes de rotation pour permettre aux une ou plusieurs branches détachables d'être entraînées en rotation par rapport à ladite monture.

5. Monture selon l'une quelconque des revendications précédentes, dans laquelle la cavité est configurée pour confiner au moins sensiblement les champs magnétiques desdits un ou plusieurs éléments magnétiques à l'intérieur de la cavité.

6. Monture selon l'une quelconque des revendications précédentes, dans laquelle les une ou plusieurs charnières comprennent un câblage électrique.

7. Dispositif de lunettes (10, 50, 60) comprenant :
la monture selon l'une quelconque des revendications précédentes, comprenant en outre un ou plusieurs verres ou affichages (12, 62) ; et
les une ou plusieurs branches détachables pour lesquelles les un ou plusieurs éléments magnétiques sont appropriés pour la fixation à la monture.

8. Dispositif de lunettes selon la revendication 7, dans lequel les une ou plusieurs branches détachables comprennent une ou plusieurs alimentations électriques rechargeables (46, 82) configurées pour fournir l'énergie au dispositif de lunettes lorsque les une ou plusieurs branches détachables sont fixées à la monture.

9. Dispositif de lunettes selon la revendication 7 ou la revendication 8, dans lequel les une ou plusieurs branches détachables comprennent un projecteur détachable (65, 75a, 75b, 83) pour projeter des données visuelles sur lesdits un ou plusieurs verres ou affichages de la monture.

10. Procédé (100) pour utiliser le dispositif de lunettes selon la revendication 7, le procédé comprenant les étapes consistant à :
fixer (101) une ou plusieurs branches détachables à la monture du dispositif de lunettes au niveau des une ou plusieurs charnières de la monture au moyen de l'attraction magnétique entre les un ou plusieurs éléments magnétiques des une ou plusieurs charnières et les une ou plusieurs branches, respectivement, et/ou
détacher (102) les une ou plusieurs branches de la monture du dispositif de lunettes,
dans lequel au moins l'une des une ou plusieurs charnières est rétractable, de sorte que ladite au moins une charnière est configurée pour se rétracter dans la cavité à l'intérieur de ladite monture, lorsque lesdites une ou plusieurs branches détachables sont détachées de la au moins une charnière.
